# EUROPEAN PATENT APPLICATION

(11) **EP 4 838 821 A1**
(43) Date of publication of application: **11.11.2026**
(21) Application number: 25736327.5
(22) Date of filing: 06.01.2025
(51) Int. Cl.: H04L 5/00, H04W 72/232, H04B 7/0456

(54) **METHOD AND APPARATUS FOR TRANSMITTING/RECEIVING PHASE TRACKING REFERENCE SIGNAL**

(30) Priority: 05.01.2024 KR 20240002466
(71) Applicant: LG Electronics Inc., Yeongdeungpo-gu Seoul 07336 (KR)
(72) Inventor: JEONG, Chanho, Seoul 06772 (KR); KANG, Jiwon, Seoul 06772 (KR); KIM, Hyungtae, Seoul 06772 (KR)
(74) Representative: Plasseraud IP
(86) International application number: PCT/KR2025/000232
(87) International publication number: WO 2025/147174

(57) **Abstract**

A method according to one embodiment of the present disclosure comprises the steps of: receiving DCI from a base station; and transmitting a PTRS to the base station. The DCI includes a PTRS-DMRS association field. A PTRS port related to the PTRS is related to codebook-based uplink transmission based on one or more antenna ports. On the basis that the number of one or more antenna ports is 3 and two PTRS ports are configured, the number of bits of the PTRS-DMRS association field is 1. One of two DMRS ports that share a first PTRS port is indicated on the basis of the PTRS-DMRS association field, and the two DMRS ports are related to two antenna ports from among three antenna ports. A second PTRS port is associated with the remaining antenna port from among the three antenna ports.

## Description

### [TECHNICAL FIELD]

The present disclosure relates to a method and an apparatus for transmitting/receiving a phase tracking reference signal.

### [BACKGROUND]

Mobile communication systems have been developed to provide a voice service while ensuring the activity of a user. However, in the mobile communication system, not only a voice, but also a data service is extended. At present, there is a shortage of resources due to an explosive increase in traffic, and users demand a higher speed service. As a result, a more advanced mobile communication system is required.

Requirements for a next-generation mobile communication system should be able to support the acceptance of explosive data traffic, a dramatic increase in the per-user data rate, the acceptance of a significant increase in the number of connected devices, very low end-to-end latency, and high-energy efficiency. To this end, various technologies are researched, which include dual connectivity, massive multiple input multiple output (MIMO), in-band full duplex, non-orthogonal multiple access (NOMA), super wideband support, device networking, and the like.

According to a legacy operation, 1/2/4/8 Tx uplink transmissions are supported, and a DMRS-PTRS association is indicated based thereon. For rank 1 (antenna port), a PTRS-DMRS association field is 0 bit, for ranks 2 to 4 (2 or 4 antenna ports), the PTRS-DMRS association field is 2 bits, and for rank > 4 (8 antenna ports), the PTRS-DMRS association field is 4 bits.

### [DISCLOSURE]

### [TECHNICAL PROBLEM]

In Rel-19 MIMO, for a 3 Tx antenna UE, a 3Tx uplink transmission of a UE with a single or multiple panels is considered. A method for indicating a PTRS-DMRS association for each PTRS port configured to support a 3 Tx uplink transmission introduced in Rel-19 is required.

An object of the present disclosure is to propose a method for indicating a PTRS-DMRS association in a codebook-based uplink transmission based on three antenna ports.

The technical objects to be achieved by the present disclosure are not limited to the aforementioned technical objects, and other technical objects, which are not mentioned above, will be apparently appreciated by those skilled in the art from the following description.

### [TECHNICAL SOLUTION]

A method according to an embodiment of the present disclosure includes: receiving, from a base station, downlink control information (DCI); and transmitting, to the base station, a phase tracking reference signal (PTRS).

The DCI includes a PTRS-DMRS association field. A PTRS port related to the PTRS is associated with codebook based uplink (UL) transmission based on one or more antenna ports.

Based on that the number of the one or more antenna ports is 3 and two PTRS ports are configured, the number of bits of the PTRS-DMRS association field is 1. One of two DMRS ports which share a first PTRS port is indicated based on the PTRS-DMRS association field, and the two DMRS ports are associated with two antenna ports among three antenna ports. A second PTRS port is associated with a remaining antenna port among the three antenna ports.

Based on that the number of the one or more antenna ports is 4 and the two PTRS ports are configured, the number of bits of the PTRS-DMRS association field may be 2. One of two first DMRS ports which share the first PTRS port may be indicated based on a value of a Most Significant Bit (MSB) of the PTRS-DMRS association field. One of two second DMRS ports which share the second PTRS port may be indicated based on a value of a Least Significant Bit (LSB) of the PTRS-DMRS association field. The two first DMRS ports may be associated with two antenna ports of four antenna ports, and the two second DMRS ports may be associated with remaining two antenna ports of the four antenna ports.

Based on that the number of the one or more antenna ports is 8 and the two PTRS ports are configured, the number of bits of the PTRS-DMRS association field may be 4. One of four first DMRS ports which share the first PTRS port may be indicated based on a value of two Most Significant Bits (MSBs) of the PTRS-DMRS association field. One of four second DMRS ports which share the second PTRS port may be indicated based on a value of two Least Significant Bits (LSBs) of the PTRS-DMRS association field. The four first DMRS ports may be associated with four antenna ports of eight antenna ports. The four second DMRS ports may be associated with remaining four antenna ports of the eight antenna ports.

The DCI may include a precoding information and number of layers field.

A Transmitted Precoding Matrix Indicator (TPMI) may be indicated based on the precoding information and number of layers field.

A precoding matrix based on the TPMI may include at least one column composed of three rows. The three rows may be associated with three antenna ports.

The precoding matrix may be related to i) partial-coherent codebook based UL transmission or ii) non-coherent codebook based UL transmission.

The two antenna ports may be associated with two of three elements in the at least one column. Each of the two elements may be based on a value other than zero.

The two antenna ports may be antenna ports 1000 and 1002. The remaining antenna port may be antenna port 1001.

Based on that the number of the one or more antenna ports is 3 and one PTRS port is configured, the number of bits of the PTRS-DMRS association field may be 1. One of two DMRS ports which share the first PTRS port may be indicated based on the PTRS-DMRS association field.

The two DMRS ports may be associated with two specific antenna ports among the three antenna ports.

The two specific antenna ports may be related to partial-coherent codebook based UL transmission.

The two specific antenna ports may include i) one port determined among two antenna ports related to partial-coherent codebook based UL transmission, and ii) a remaining one of the three antenna ports other than the two antenna ports.

The two specific antenna ports may be determined based on an order of an antenna port index among the three antenna ports.

A user equipment (UE) according to another embodiment of the present disclosure includes: one or more transceivers; one or more processors; and one or more memories connected to the one or more processors and storing instructions.

The instructions, based on being executed by the one or more processors, cause the UE to perform all steps of any one method among the methods.

An apparatus according to yet another embodiment of the present disclosure includes: one or more memories; and one or more processors functionally connected to the one or more memories, in which the one or more memories store instructions which, based on being executed by the one or more processors, cause the apparatus to perform all steps of any one method among the methods.

A non-transitory computer-readable storage medium according to still yet another embodiment of the present disclosure stores instructions. The instructions, based on being executed by one or more processors, cause a user equipment (UE) to perform all steps of any one method among the methods.

A method according to still yet another embodiment of the present disclosure includes: transmitting, to a user equipment (UE), Downlink Control Information (DCI); and receiving, from the UE, a Phase Tracking Reference Signal (PTRS).

The DCI includes a PTRS-DMRS association field. A PTRS port related to the PTRS is associated with codebook based uplink (UL) transmission based on one or more antenna ports.

Based on that the number of the one or more antenna ports is 3 and two PTRS ports are configured, the number of bits of the PTRS-DMRS association field is 1. One of two DMRS ports which share the first PTRS port is indicated based on the PTRS-DMRS association field. The two DMRS ports are associated with two antenna ports among three antenna ports. A second PTRS port is associated with a remaining antenna port among the three antenna ports.

A base station according to still yet another embodiment of the present disclosure includes: one or more transceivers; one or more processors; and one or more memories connected to the one or more processors and storing instructions.

The instructions, based on being executed by the one or more processors, cause the base station to perform all steps of the method.

### [ADVANTAGEOUS EFFECTS]

According to embodiments of the present disclosure, compared to a legacy scheme in which the number of bits of a PTRS-DMRS association field is determined by considering the number of ranks, DCI overhead required for indicating a PTRS-DMRS association related to a 3TX UL transmission can be reduced.

Effects which can be obtained in the present disclosure are not limited to the aforementioned effects and other unmentioned effects will be clearly understood by those skilled in the art from the following description.

### [BRIEF DESCRIPTION OF THE DRAWINGS]

FIG. 1 is a diagram illustrating one example of an uplink transmission/reception operation.
FIG. 2 is a flowchart for describing a method according to an embodiment of the present disclosure.
FIG. 3 is a flowchart for describing a method according to another embodiment of the present disclosure.
FIG. 4 is a diagram illustrating configurations of a first device and a second device according to an embodiment of the present disclosure.

### [DETAILED DESCRIPTION]

Reference will now be made in detail to embodiments of the present disclosure, examples of which are illustrated in the accompanying drawings. A detailed description to be disclosed below together with the accompanying drawing is to describe exemplary embodiments of the present disclosure and not to describe a unique embodiment for carrying out the present disclosure. The detailed description below includes details to provide a complete understanding of the present disclosure.

In some cases, in order to prevent a concept of the present disclosure from being ambiguous, known structures and devices may be omitted or illustrated in a block diagram format based on core functions of each structure and device.

Hereinafter, downlink (DL) means communication from the base station to the terminal and uplink (UL) means communication from the terminal to the base station. In downlink, a transmitter may be part of the base station, and a receiver may be part of the terminal. In uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.
DeModulation Reference Signal (DMRS)
DMRS reception procedure
A DMRS-related operation for PDSCH reception will be described.

When receiving PDSCH scheduled by DCI format 1_0 or receiving PDSCH before dedicated higher layer configuration of any of the parameters dmrs-AdditionalPosition, maxLength, and dmrs-Type, the UE assumes that the PDSCH is not present in any symbol carrying DM-RS except for PDSCH with allocation duration of 2 symbols with PDSCH mapping type B, and a single symbol front-loaded DM-RS of configuration type 1 on DM-RS port 1000 is transmitted, and that all the remaining orthogonal antenna ports are not associated with transmission of PDSCH to another UE.

In addition, for PDSCH with mapping type A, the UE assumes that dmrs-AdditionalPosition = 'pos2' and up to two additional single-symbol DM-RS are present in a slot according to the PDSCH duration indicated in the DCI. For PDSCH with allocation duration of 7 symbols for normal CP or 6 symbols for extended CP with mapping type B, the UE assumes that one additional single-symbol DM-RS is present in the 5th or 6th symbol when the front-loaded DM-RS symbol is in the 1st or 2nd symbol respectively of the PDSCH allocation duration. Otherwise, the UE assumes that the additional DM-RS symbol is not present. And, for PDSCH with allocation duration of 4 symbols with mapping type B, the UE assumes that no additional DM-RS are present. For PDSCH with allocation duration of 2 symbols with mapping type B, the UE assumes that no additional DM-RS are present, and the UE assumes that the PDSCH is present in the symbol carrying DM-RS.

When receiving the PDSCH scheduled by DCI format 1_1 by a PDCCH having CRC scrambled by C-RNTI, MCS-C-RNTI, or configured scheduling (CS)-RNTI,
- The UE may be configured as a higher layer parameter dmrs_Type and the configured DMRS configuration type is used for receiving the PDSCH.
- The UE may be configured as a maximum number of front-loaded DMRS symbols for the PDSCH by the higher layer parameter maxLength given by DMRS-DownlinkConfig.

In the UE, the number of DMRS ports may be scheduled by an antenna port index of DCI format 1_1.

The DMRS configuration type is configured by the dmrs-Type parameter in DMRS-DownlinkConfig IE of Table 1. DMRS configuration type 1 has a higher RS density in a frequency domain and supports up to 4(8) ports for single (double)-symbol DMRS. In addition, DMRS configuration type 1 supports length-2 F-CDM and FDM for the single-symbol DMRS and supports length-2 F/T-CDM and FDM for the double-symbol DMRS. DMRS configuration type 2 has more DMRS antenna ports and supports up to 6(12) ports for the single (double)-symbol DMRS.

Table 1 below shows an example of DMRS-DownlinkConfig IE used to configure downlink DMRS for PDSCH.

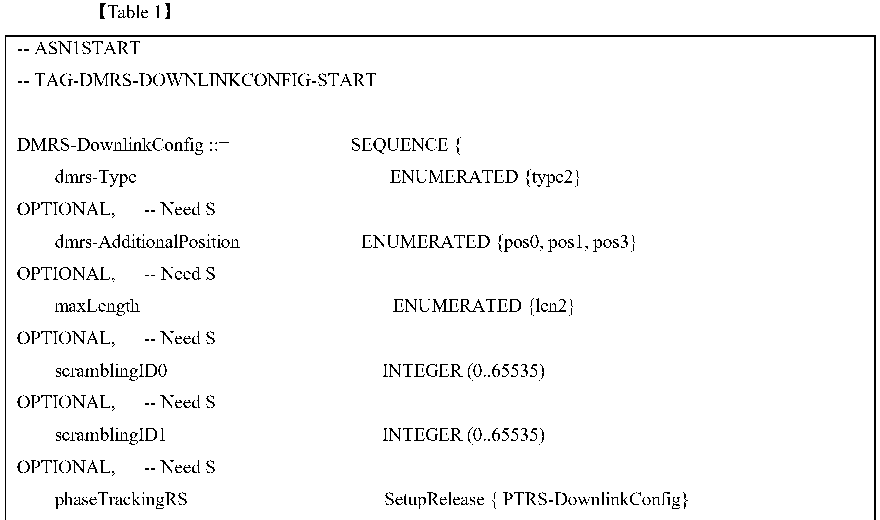

In Table 1, parameter dmrs-AdditionalPosition represents a location for additional DM-RS in DL and when there is no corresponding parameter, the UE applies a pos2 value. Parameter Dmrs-Type represents selection of the DMRS type to be used for DL and when there is no corresponding parameter, the UE uses DMRS type 1. Parameter Max-Length represents the maximum number of OFDM symbols for DL front loaded DMRS, and len1 corresponds to a value of 1. Parameter PhaseTrackingRS configures DL PTRS and when the corresponding parameter does not exist or is cancelled, the UE assumes that there is no DL PTRS.

For DM-RS configuration type 1,
- when is scheduled with one codeword and antenna port mapping is allocated with indices of {2, 9, 10, 11, or 30} or the UE is scheduled with two codewords,
   the UE may assume that all remaining orthogonal antenna ports are not related to transmission of the PDSCH to another UE.

For DM-RS configuration type 2,
- when is scheduled with one codeword and the antenna port mapping is allocated with indices of {2, 10, 23} or the UE is scheduled with two codewords,
   the UE may assume that all remaining orthogonal antenna ports are not related to transmission of the PDSCH to another UE.

An example of a DL DMRS procedure is described below.

A base station transmits DMRS configuration information to a UE.

The DMRS configuration information may refer to DMRS-DownlinkConfig IE. The DMRS-DownlinkConfig IE may include parameter dmrs-Type, parameter dmrs-AdditionalPosition, parameter maxLength, parameter phaseTrackingRS, etc.

The parameter dmrs-Type is a parameter for selection of a DMRS configuration type to be used for DL. In NR, the DMRS may be classified into two configuration types: (1) DMRS configuration type 1 and (2) DMRS configuration type 2. The DMRS configuration type 1 is a type having a higher RS density in the frequency domain, and the DMRS configuration type 2 is a type having more DMRS antenna ports.

The parameter dmrs-AdditionalPosition is a parameter indicating the position of an additional DMRS in the DL. If the corresponding parameter is not present, the UE applies value of pos2. In the DMRS, a first position of a front-loaded DMRS may be determined according to the PDSCH mapping type (type A or type B), and an additional DMRS may be configured to support a high speed UE. The front-loaded DMRS occupies 1 or 2 consecutive OFDM symbols and is indicated by RRC signaling and downlink control information (DCI).

The parameter maxLength is a parameter indicating the maximum number of OFDM symbols for DL front-loaded DMRS. The parameter phaseTrackingRS is a parameter for configuring DL PTRS. If the corresponding parameter is not present or has been canceled, the UE assumes that there is no DL PTRS.

The base station generates a sequence used for DMRS.

The sequence for DMRS is generated according to Equation 1 below. [Equation 1] $r \left(n\right) = \frac{1}{\sqrt{2}} \left(1-2⋅c\left(2n\right)\right) + j \frac{1}{\sqrt{2}} \left(1-2⋅c\left(2n+1\right)\right)$

The pseudo-random sequence *c(i)* is defined by 3GPP TS 38.211 5.2.1. That is, *c(i)* may be a length-31 gold sequence using two m-sequences. A pseudo-random sequence generator is initialized by Equation 2 below. [Equation 2] ${c}_{init} = \left({2}^{17}\left({N}_{symb}^{slot}{n}_{s , f}^{μ}+l+1\right)\left(2{N}_{ID}^{{n}_{SCID}}+1\right)+2{N}_{ID}^{{n}_{SCID}}+{n}_{SCID}\right) mod {2}^{31}$
where *l* is the OFDM symbol number within the slot, and ${n}_{s , f}^{μ}$ is the slot number within a frame.
${N}_{ID}^{0} , {N}_{ID}^{1} ∈ \left\{0,1,…,65535\right\}$ are given by the higher-layer parameter *scramblingID0* and *scramblingID1*, respectively, in the *DMRS-DownlinkConfig* IE if provided and the PDSCH is scheduled by PDCCH using DCI format 1_1 with the CRC scrambled by C-RNTI, MCS-C-RNTI, or CS-RNTI.
   - ${N}_{ID}^{0} ∈ \left\{0,1,…,65535\right\}$ is given by the higher-layer parameter *scramblingID0* in the *DMRS-DownlinkConfig* IE if provided and the PDSCH is scheduled by PDCCH using DCI format 1_0 with the CRC scrambled by C-RNTI, MCS-C-RNTI, or CS-RNTI.
   - ${N}_{ID}^{{n}_{SCID}} = {N}_{ID}^{cell}$, otherwise, the quantity n_{SCID} ∈ {0, 1} is given by the DMRS sequence initialization field in the DCI associated with the PDSCH transmission if DCI format 1_1 is used.

The base station maps the generated sequence to a resource element. Here, the resource element may mean including at least one of time, frequency, antenna port, or code.

The base station transmits the DMRS to the UE on the resource element. The UE receives the PDSCH using the received DMRS.

### UE DMRS transmission procedure

A DMRS related operation for receiving the PUSCH will be described. As described above, UL means signal transmission (or communication) from the UE to the BS. The UL DMRS related operation is similar to the DL DMRS related operation described above, and names of the parameters related to DL may be replaced with the names of parameters related to UL.

That is, DMRS-DownlinkConfig IE may be replaced with DMRS-UplinkConfig IE, the PDSCH mapping type may be replaced with a PUSCH mapping type, and the PDSCH may be replaced with the PUSCH. In addition, in the DL DMRS related operation, the BS may be replaced with the UE and the UE may be replaced with the BS. Sequence generation for the UL DMRS may be defined differently according to whether transform precoding being enabled.

More specifically, in respect to the DMRS, when cyclic prefix orthogonal frequency division multiplexing (CP-OFDM) is used (or when transform precoding is not enabled), a PN sequence is used and when Discrete Fourier Transform-spread-OFDM (DFT-s-OFDM) is used (when the transform precoding is enabled), a ZC sequence having a length of 30 or more is used.

Table 2 below is a table showing one example of DMRS-UplinkConfig IE used for configuring uplink DMRS for the PUSCH.

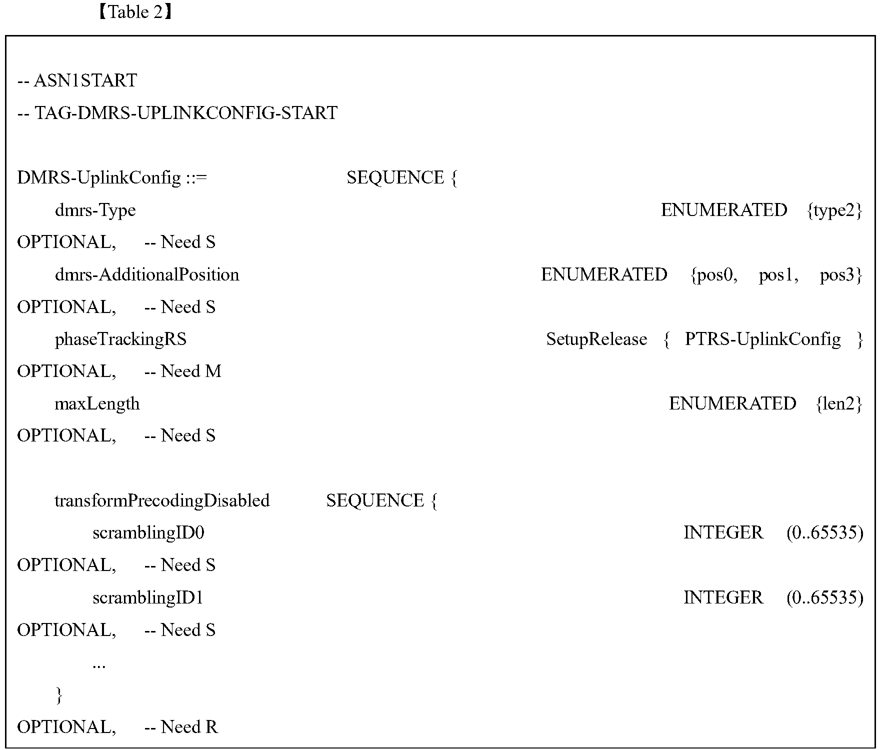

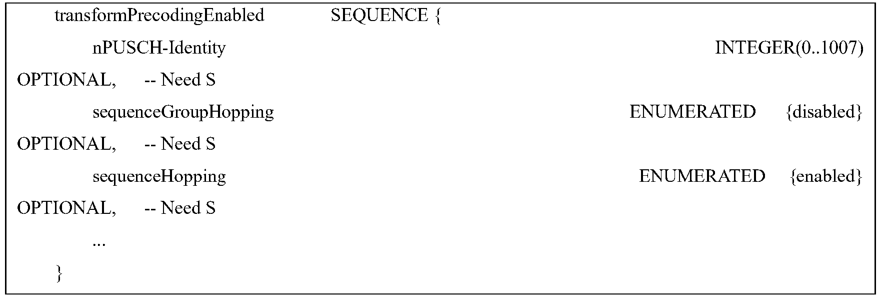

In Table 2, parameter dmrs-AdditionalPosition represents a location for additional DM-RS in UL and when there is no corresponding parameter, the UE applies a pos2 value. Parameter Dmrs-Type represents selection of the DMRS type to be used for UL and when there is no corresponding parameter, the UE uses DMRS type 1.

Parameter Max-Length represents the maximum number of OFDM symbols for UL front loaded DMRS, and len1 corresponds to a value of 1. Parameter PhaseTrackingRS configures UL PTRS. Parameter transformPrecodingdisabled indicates a DMRS-related parameter for Cyclic Prefix OFDM. Parameter transformPrecodingEnabled indicates DMRS-related parameters for DFT-s-OFDM (Transform Precoding).

Hereinafter, the UE DM-RS transmission procedure will be described in more detail.

When the transmitted PUSCH is neither scheduled by DCI format 0_1 with CRC scrambled by C-RNTI, CS-RNTI, or MCS-C-RNTI nor corresponds to a configured grant, the UE uses a single symbol front-loaded DM-RS of configuration type 1 on DM-RS port 0, and the remaining REs that are not used for DM-RS in the symbols are not used for any PUSCH transmission except for a PUSCH with an allocated duration of 2 or less OFDM symbols with disabled transform precoding. Additional DM-RS may be transmitted according to a scheduling type and PUSCH duration by considering whether frequency hopping is enabled.

When the frequency hopping is disabled: The UE assumes that dmrs-AdditionalPosition is equal to 'pos2', and up to 2 additional DM-RSs may be transmitted according to the PUSCH duration.

When the frequency hopping is enabled, the UE assumes that dmrs-AdditionalPosition is equal to 'pos1', and up to 1 additional DM-RSs may be transmitted according to the PUSCH duration.

When the transmitted PUSCH is scheduled by activation DCI format 0_0 with CRC scrambled by CS-RNTI, the UE uses a single symbol front-loaded DM-RS of a configuration type provided by a higher-layer parameter dmrs-Type of configuredGrantConfig on DM-RS port 0, and the remaining REs that are not used for DM-RS in the symbols are not used for any PUSCH transmission except for a PUSCH with an allocated duration of two or less OFDM symbols with disabled transform precoding, and an additional DM-RS having dmrs-AdditionalPosition from configuredGrantConfig may be transmitted based on the scheduling type and the PUSCH duration considering whether the frequency hopping is enabled.

When the transmitted PUSCH is scheduled by DCI format 0_1 having CRC scrambled by C-RNTI, CS-RNTI, or MCS-RNTI or corresponds to the configured grant,
- The UE may be configured as the higher layer parameter dmrs-Type in DMRS-UplinkConfig and the configured DM-RS configuration type is used for transmitting the PUSCH.
- The UE may be configured as a maximum number of front-loaded DMRS symbols for the PUSCH by the higher layer parameter maxLength in DMRS-UplinkConfig.

When the UE transmitting the PUSCH is configured as higher layer parameter phaseTrackingRS in DMRS-UplinkConfig, the UE may assume that the configurations do not simultaneously occur for the transmitted PUSCH.
- Any DM-RS port of 4-7 or 6-11 is scheduled for the UE for DM-RS configuration type 1 and type 2 and the PT-RS is transmitted from the UE.

For the PUSCH scheduled by DCI format 0_1, by activation DCI format 0_1 having the CRC scrambled by the CS-RNTI or by configured grant type 1 configuration, the UE assumes that a DM-RS CDM group is not used for data transmission.

### Phase Tracking Reference Signal (PTRS)

In the 5G NR standard, Phase-tracking reference signal (PTRS) was introduced to compensate for impairment caused by phase noise in A high-frequency band. The phase noise causes common phase error (CPE) and inter-carrier interference (ICI) in the frequency domain.

Hereinafter, the DL PTRS and UL PTRS related operations will be described in detail.

### DL PTRS related operation

An example of a DL PTRS procedure is described in detail below.

A base station transmits PTRS configuration information to a UE. The PTRS configuration information may refer to PTRS-DownlinkConfig IE. The PTRS-DownlinkConfig IE may include frequencyDensity parameter, timeDensity parameter, epre-Ratio parameter, resourceElementOffset parameter, etc.

The frequencyDensity parameter is a parameter representing a presence and a frequency density of a DL PTRS as a function of scheduled BW. The timeDensity parameter is a parameter representing the presence and a time density of the DL PTRS as a function of modulation and coding scheme (MCS). The epre-Ratio parameter is a parameter representing an energy per resource element (EPRE) between a PTRS and a PDSCH.

The base station generates a sequence used for the PTRS. As shown in Equation 3 below, the sequence for the PTRS is generated using a DMRS sequence of the same subcarrier. The sequence generation for the PTRS may be differently defined depending on whether transform precoding has been enabled, and Equation 3 below represents an example where the transform precoding is disabled. [Equation 3] ${r}_{k} = r \left(2m+k′\right)$

Here, *r*(2*m* + *k*') is a DMRS given in a location *l*₀ and a subcarrier *k*.

That is, the sequence of the PTRS uses a sequence of the DMRS, and more specifically, the sequence of the PTRS in the subcarrier k is the same as a sequence of the DMRS in the subcarrier k.

The base station maps the generated sequence to a resource element. Here, the resource element may mean including at least one of time, frequency, antenna port or code.

A location of the PTRS in the time domain starts from a starting symbol of PDSCH allocation and is mapped at a specific symbol spacing. If a DMRS symbol is present, the mapping is performed from a symbol next to the DMRS symbol. The specific symbol spacing may be 1, 2 or 4 symbols.

A frequency location of the PTRS in relation to resource element mapping of the PTRS is determined by a frequency location of an associated DMRS port and higher layer parameter UL-PTRS-RE-offset. Here, UL-PTRS-RE-offset is included in PTRS configuration and indicates a subcarrier offset for UL PTRS for CP-OFDM.

For DL, the PTRS port is related to a DMRS port of a lowest index among scheduled DMRS ports. And, for UL, the base station configures which DMRS port is related to the PTRS port via UL DCI.

The base station transmits the PTRS to the UE on a resource element.

### UL PTRS related operation

An UL PTRS related operation is similar to the DL PTRS related operation mentioned above, and the names of the parameters related to the DL PTRS may be replaced by the names of the parameters related to the UL PTRS. That is, PTRS-DownlinkConfig IE may be replaced by PTRS-UplinkConfig IE, and in the DL PTRS related operation, the base station may be replaced by the UE and the UE may be replaced by the base station. In the same manner, the sequence generation for the PTRS may be differently defined depending on whether transform precoding has been enabled.

### Downlink transmission and reception operations

The eNB may schedule downlink transmission such as the frequency/time resource, the transport layer, a downlink precoder, the MCS, etc. Specifically, the eNB may determine a beam for PDSCH transmission to the UE.

In addition, the UE may receive Downlink Control Information (DCI) for downlink scheduling (i.e., including scheduling information of the PDSCH) on the PDCCH. DCI format 1_0 or DCI format 1_1 may be used for the downlink scheduling and specifically, DCI format 1_1 may include information such as the following examples: Identifier for DCI formats, Bandwidth part indicator, Frequency domain resource assignment, Time domain resource assignment, PRB bundling size indicator, Rate matching indicator, ZP CSI-RS trigger, Antenna port(s), Transmission configuration indication (TCI), SRS request, and Demodulation Reference Signal (DMRS) sequence initialization.

In particular, according to each state/index indicated in an antenna port(s) field, the number of DMRS ports may be scheduled, and single-user (SU)/multi-user (MU) transmission scheduling is also available. Specifically, the order of DMRS ports corresponding to the number of CWs may be predefined depending on dmrs-type and maxLength, and the number and/or order of DMRS ports may be indicated via an antenna port field of DCI.

In addition, the TCI field consists of 3 bits, and the QCL for the DMRS may be dynamically indicated by indicating a maximum of 8 TCI states according to the TCI field value. The UE may receive downlink data from the base station on the PDSCH. When the UE detects a PDCCH including DCI format 1_0 or 1_1, the UE may decode the PDSCH according to an indication by the corresponding DCI.

Here, when the UE receives a PDSCH scheduled by DCI format 1_1, a DMRS configuration type may be configured by higher layer parameter "dmrs-Type" in the UE and the DMRS configuration type is used for receiving the PDSCH. Further, in the UE, the maximum number of front-loaded DMRS symbols for the PDSCH may be configured by higher layer parameter "maxLength."

In the case of DMRS configuration type 1, when a single codeword is scheduled and an antenna port mapped to an index of {2, 9, 10, 11, or 30} is designated in the UE or when two codewords are scheduled in the UE, the UE assumes that all remaining orthogonal antenna ports are not associated with PDSCH transmission to another UE. Alternatively, in the case of DMRS configuration type 2, when a single codeword is scheduled and an antenna port mapped to an index of {2, 10, or 23} is designated in the UE or when two codewords are scheduled in the UE, the UE assumes that all remaining orthogonal antenna ports are not related to PDSCH transmission to another UE.

### Uplink transmission/reception operation

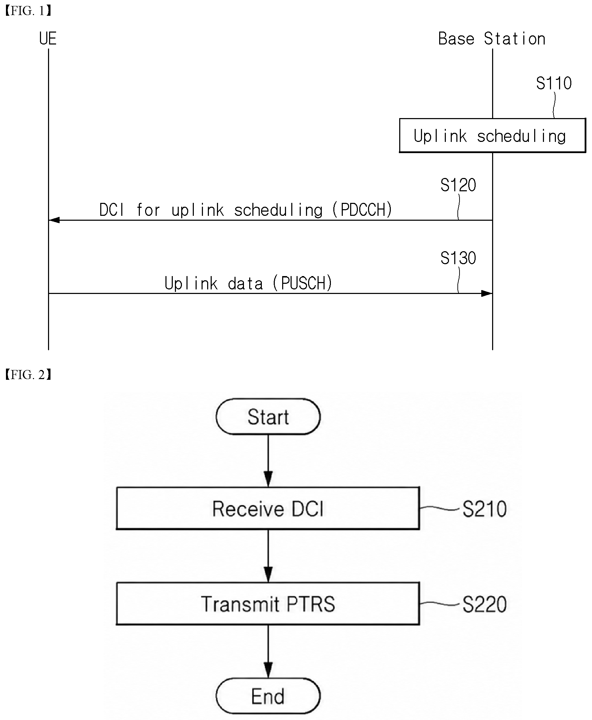

FIG. 1 illustrates an example of an uplink transmission and reception operation.

Referring to the FIG. 1, the eNB may schedule uplink transmission such as the frequency/time resource, the transport layer, an uplink precoder, the MCS, etc., (S110). In particular, the eNB may determine a beam for PUSCH transmission of the UE through the beam management operations described above. And, the UE may receive, from the eNB, DCI for uplink scheduling (i.e., including scheduling information of the PUSCH) on the PDCCH (S120). DCI format 0_0 or 0_1 may be used for the uplink scheduling and in particular, DCI format 0_1 may include information such as the following examples: Identifier for DCI formats, UL/Supplementary uplink (SUL) indicator, Bandwidth part indicator, Frequency domain resource assignment, Time domain resource assignment, Frequency hopping flag, Modulation and coding scheme (MCS), SRS resource indicator (SRI), Precoding information and number of layers, Antenna port(s), SRS request, DMRS sequence initialization, and Uplink Shared Channel (UL-SCH) indicator.

In particular, configured SRS resources in an SRS resource set associated with higher layer parameter "usage" may be indicated by an SRS resource indicator field. Further, "spatialRelationInfo" may be configured for each SRS resource and a value of "spatialRelationInfo" may be one of {CRI, SSB, and SRI}.

In addition, the UE may transmit the uplink data to the eNB on the PUSCH (S130). When the UE detects a PDCCH including DCI format 0_0 or 0_1, the UE may transmit the corresponding PUSCH according to the indication by the corresponding DCI. two schemes(Codebook based transmission scheme and non-codebook based transmission scheme) are supported for PUSCH transmission.

In the case of the codebook based transmission, when higher layer parameter txConfig" is set to "codebook", the UE is configured to the codebook based transmission. On the contrary, when higher layer parameter txConfig" is set to "nonCodebook", the UE is configured to the non-codebook based transmission. When higher layer parameter "txConfig" is not configured, the UE does not predict that the PUSCH is scheduled by DCI format 0_1. When the PUSCH is scheduled by DCI format 0_0, the PUSCH transmission is based on a single antenna port. In the case of the codebook based transmission, the PUSCH may be scheduled by DCI format 0_0, DCI format 0_1, or semi-statically. When the PUSCH is scheduled by DCI format 0_1, the UE determines a PUSCH transmission precoder based on the SRI, the Transmit Precoding Matrix Indicator (TPMI), and the transmission rank from the DCI as given by the SRS resource indicator and the Precoding information and number of layers field. The TPMI is used for indicating a precoder to be applied over the antenna port and when multiple SRS resources are configured, the TPMI corresponds to the SRS resource selected by the SRI. Alternatively, when the single SRS resource is configured, the TPMI is used for indicating the precoder to be applied over the antenna port and corresponds to the corresponding single SRS resource. A transmission precoder is selected from an uplink codebook having the same antenna port number as higher layer parameter "nrofSRS-Ports". When the UE is set to higher layer parameter "txConfig" set to "codebook", at least one SRS resource is configured in the UE. An SRI indicated in slot n is associated with most recent transmission of the SRS resource identified by the SRI and here, the SRS resource precedes PDCCH (i.e., slot n) carrying the SRI.

In the case of the non-codebook based transmission, the PUSCH may be scheduled by DCI format 0_0, DCI format 0_1, or semi-statically. When multiple SRS resources are configured, the UE may determine the PUSCH precoder and the transmission rank based on a wideband SRI and here, the SRI is given by the SRS resource indicator in the DCI or given by higher layer parameter "srs-ResourceIndicator". The UE may use one or multiple SRS resources for SRS transmission and here, the number of SRS resources may be configured for simultaneous transmission in the same RB based on the UE capability. Only one SRS port is configured for each SRS resource. Only one SRS resource may be configured to higher layer parameter "usage" set to "nonCodebook". The maximum number of SRS resources which may be configured for non-codebook based uplink transmission is 4. The SRI indicated in slot n is associated with most recent transmission of the SRS resource identified by the SRI and here, the SRS transmission precedes PDCCH (i.e., slot n) carrying the SRI.

### Simultaneous Transmission across Multi-panels (STxMP) related description

In R18, a method in which the UE simultaneously multiple channels/RSs of the same type or a method in which the same UE simultaneously transmits multiple channels/RSs of different types is discussed. In the case of an existing UE, an operation of transmitting multiple channels/RSs at one time is restricted (e.g., it is possible to simultaneously transmit multiple SRS resources of different SRS sets for UL beam measurement, but it is impossible to simultaneously transmit multiple PUSCHs), but an advanced UE in the future will be able to ease these restrictions and simultaneously transmit multiple channels or RSs using multiple transmission panels, and the UE is called STxMP UE. For example, two PUSCHs corresponding to two UL TBs are scheduled on the same RE, and Spatial relation RS 1 and PC parameter Set 1 (i.e., UL TCI state 1) and Spatial relation RS 2 and PC parameter Set 2 (i.e., UL TCI state 2) are configured for PUSCH 1 and 2 transmission, respectively. The UE transmits PUSCH 1 using panel 1 corresponding to UL TCI state 1 and at the same time, transmits PUSCH 2 using panel 2 corresponding to UL TCI state 2.

When the base station schedules the PUSCH through the DCI, the BS may indicate whether to transmit the PUSCH in STxMP, whether to transmit the PUSCH by a single panel, whether to perform MTRP PUSCH repeat transmission, etc. Of course, the UE must have an STxMP capability and an STxMP mode must be enabled in advance through RRC signaling, etc. For this purpose, an existing SRS resource set indication field may be redefined and used, or a new DCI field may be introduced.

Two methods are considered for R18 STxMP transmission: SFN and SDM methods.

The SFN method is a method in which other panels transmit on the same channel as a channel transmitted on a panel. However, since UL channels of the respective panels are different from each other, transmission is performed using a different precoder, different transmit power, and different transmission beam (i.e., spatial relation RS indicated by UL TCI) for each panel considering the difference.

The SDM method is a method in which transmission is possible from rank 2 or higher. In the SDM method, a part of multi-layers is transmitted by panel 1, and remaining layers are transmitted by panel 2. For example, in 2-layer transmission, the panel 1 transmits a 1st layer, and the panel 2 transmits a 2nd layer. Even in this case, since UL channels of the respective panels are different from each other, transmission is performed using a different precoder, different transmit power, and different transmission beam (i.e., spatial relation RS indicated by UL TCI) for each panel considering the difference.

The panel is not a term used in the standard, and other resources/terms corresponding to the panel are used. For example, different panels may be mapped to and used in different SRS resource sets or SRS resources. For example, a first panel may be mapped to SRS resource set 0, and a second panel may be mapped to SRS resource set 1. SRS resources of the SRS resource set 0 may refer to a transmit antenna port of the first panel, and SRS resources of the SRS resource set 1 may refer to a transmit antenna port of the second panel.

### Unified TCI framework related description

In R17, the UL TCI state may also be indicated in addition to the DL TCI state through a DL DCI (e.g., DCI format 1-1 or 1-2), or only the UL TCI state may be indicated without indicating the DL TCI state. As a result, the schemes used in the existing R15/R16 to configure UL beam and power control (PC) are replaced in R17 with the UL TCI state indication method. More specifically, in R17, one UL TCI state may be indicated through the TCI field of DL DCI, and the UL TCI state may be applied to all PUSCHs and all PUCCHs after a predetermined time called beam application time, and may be applied to some or all of the indicated SRS resource sets. In R18, a scheme to indicate multiple UL TCI states (and/or DL TCI states) through the TCI field of DL DCI is under discussion.

### AIML related description

With the technological advancement of artificial intelligence/machine learning (AI/ML), node(s) and UE(s) constituting a wireless communication network are becoming more intelligent/advanced. In particular, due to the intelligence of networks/base stations, it is expected that various network/base station decision parameter values (e.g., transmission/reception power of each BS, transmission power of each UE, precoder/beam of BS/UE, time/frequency resource allocation for each UE, duplex method of each BS, etc.) can be quickly optimized and derived/applied based on various environmental parameters (e.g., distribution/location of base stations, distribution/location/material of buildings/furniture, etc., location/movement direction/speed of UEs, climate information, etc.).

The contents (the DMRS, the PTRS, the UL transmission/reception operation, AI/ML etc.) described above may be applied in combination with methods proposed in the present disclosure to be described below or may be supplemented to clarify technical features of the methods proposed in the present disclosure. Methods to be described below are just distinguished for convenience and it is needless to say that some components of any one method may be substituted with some components of another method or may be applied in combination with each other.

In the present disclosure, 'port' and 'antenna port' may be interpreted as the same meaning. For example, PTRS (DMRS) port means PTRS (DMRS) antenna port, and vice versa.

In the present disclosure, 'DMRS (or PTRS)' may mean 'DM-RS (or PT-RS)', and vice versa.

3 Tx may be applied for UL PUSCH transmission in NR MIMO Rel-19 or later standards. According to legacy standards, 1/2/4/8 Tx uplink transmission is supported. As in WID below, a method for a PTRS-DMRS association is required to support a 3 Tx uplink transmission introduced in Rel-19.

"Specify non-coherent UL codebook to facilitate 3-antenna-port codebook-based transmissions, without enhancement on UL full power transmission and without enhancement on SRS resource

Note: UL full power transmission mode 1 and 2 are not supported."

A method and an apparatus for a PTRS-DMRS association to support 3 Tx UL are proposed as follows.

Although a proposed scheme is described with reference to a UE PTRS transmission procedure, the proposed scheme may also be applied to a PTRS reception procedure in a same scheme. However, in the PTRS transmission procedure, the PTRS-DMRS association may be determined for each rank indicated based on an SRI or PMI.

Hereinafter, a legacy operation related to the PTRS-DMRS association will be described in detail.

In DMRS type 1, there are a total of 8 ports from port 0 to port 8 for 1 FL symbol. When a maximum number of PTRS ports is set to 1, the PTRS-DMRS association may be performed based on a 2-bit table. This example may be applied when two codewords are scheduled for the UE. Specifically, the PTRS port may be associated with one of 1st to 8th scheduled DMRS ports indicated based on a 2-bit PTRS-DMRS association field of DCI for a codeword having a higher MCS.

When the maximum number of PTRS ports is set to 2, the PTRS-DMRS association may be performed based on a 4-bit table. As an example, a value of MSB 2 bits of the PTRS-DMRS association field indicates one of 1st to 4th DMRS ports which share PTRS port 0. As an example, a value of LSB 2 bits of the PTRS-DMRS association field indicates one of 1st to 4th DMRS ports which share PTRS port 1.

For an NCB PUSCH case, it may be known that the 1st to 4th DMRS ports which share PTRS port 0 have PTRS port index = 0 set in an SRS resource indicated by the SRI. The 1st to 4th DMRS ports sharing PTRS port 1 may also be known in the same scheme.

For one codeword (CW) of a CB PUSCH case, DMRS ports corresponding to layers using PUSCH antenna ports 1000 and 1002 share PTRS 0, and DMRS ports corresponding to layers using PUSCH antenna ports 1001 and 1003 share PTRS 1. In addition, for two codewords (CWs), the DMRS ports corresponding to the layers using PUSCH antenna ports 1000, 1001, 1004, 1005 share PTRS 0, and the DMRS ports corresponding to the layers using PUSCH antenna ports 1002, 1003, 1006, 1007 share PTRS 1.

Operations according to the legacy standards are as follows.

For non-codebook based UL transmission, the actual number of UL PT-RS port(s) to transmit is determined based on SRI(s) in DCI format 0_1, 0_2 or 0_3 or higher layer parameter *sri-ResourceIndicator* in *rrc-ConfiguredUplinkGrant*. When two SRS resource sets are configured in *srs-ResourceSetToAddModList* or *srs-ResourceSetToAddModListDCI-0-2* with higher layer parameter *usage* in *SRS-ResourceSet* set to 'noncodebook', the actual number of UL PT-RS port(s) to transmit corresponding to each SRS resource set is determined based on SRI(s) corresponding to the associated SRS resource set or higher layer parameter *sri-ResourceIndicator or sri-ResourceIndicator2* corresponding to the associated SRS resource set in *rrc-ConfiguredUplinkGrant*. A UE is configured with the PT-RS port index for each configured SRS resource by the higher layer parameter *ptrs-PortIndex* configured by *SRS-Config* if the UE is configured with the higher layer parameter *phaseTrackingRS in DMRS-UplinkConfig*. If the PT-RS port index associated with different SRIs are the same, the corresponding UL DM-RS ports are associated to the one UL PT-RS port.

When the higher layer parameter *multipanelScheme* is set to 'sdmscheme' and two SRS resource sets are configured in *srs-ResourceSetToAddModList* or *srs-ResourceSetToAddModListDCI-0-2* with higher layer parameter *usage* in *SRS-ResourceSet* set to 'codebook'/'nonCodebook' and higher layer parameter *maxNrofPortsforSDM* in *PTRS-UplinkConfig* set to n2, the actual number of UL PT-RS port(s) to transmit corresponding to SRS resource sets is *2*.

When the higher layer parameter *multipanelScheme* is set to 'SFNscheme' and two SRS resource sets are configured in *srs-ResourceSetToAddModList* or *srs-ResourceSetToAddModListDCI-0-2* with higher layer parameter *usage* in *SRS-ResourceSet* set to 'codebook'/'nonCodebook' and the higher layer parameter *maxNrofPorts* in *PTRS-UplinkConfig* is set to *n2*, the actual number of UL PT-RS port(s) to transmit corresponding to each SRS resource set is determined based on 1st TPMI codepoint field for 'codebook' or 1^{st} SRI(s) codepoint field for 'nonCodebook'.

For partial-coherent and non-coherent codebook-based UL transmission, the actual number of UL PT-RS port(s) is determined based on TPMI(s) and/or number of layers which are indicated by '*Precoding information and number of layers'* field(s) in DCI format 0_1, 0_2 or 0_3 or configured by higher layer parameter *precodingAndNumberOfLayers*.
- If the UE is configured with the higher layer parameter *maxNrofPorts* in *PTRS-UplinkConfig* set to 'n2', the actual UL PT-RS port(s) and the associated transmission layer(s) are derived from indicated TPMI(s) as:
   - PUSCH antenna ports 1000 and 1002 in indicated TPMI(s) share PT-RS port 0, and PUSCH antenna ports 1001 and 1003 in indicated TPMI(s) share PT-RS port 1.

UL PT-RS port 0 is associated with the UL layer 'x' of layers which are transmitted with PUSCH antenna port 1000 and PUSCH antenna port 1002 in indicated TPMI(s), and UL PT-RS port 1 is associated with the UL layer 'y' of layers which are transmitted with PUSCH antenna port 1001 and PUSCH antenna port 1003 in indicated TPMI(s). Where 'x' and/or 'y' are given by DCI parameter *'PTRS-DMRS association'* as shown in DCI format 0 1, 0_2 and 0_3 described in Clause 7.3.1 of [5, TS38.212].

If a UE is scheduled with two codewords,
- If the UE is configured with the higher layer parameter *maxNrofPorts* in *PTRS-UplinkConfig* set to 'n1', the PT-RS port is associated with the one of DM-RS ports indicated by DCI field *PTRS-DMRS association* for the codeword with the higher MCS. If the MCS indices of the two codewords are the same, the PT-RS antenna port is associated with codeword 0. When a codeword is scheduled to transmit PUSCH for retransmission, the MCS for determining PT-RS association to codeword is obtained from the DCI for the same transport block in the initial transmission.
- If the UE is configured with the higher layer parameter *maxNrofPorts* in *PTRS-UplinkConfig* set to 'n2', each PT-RS port is associated with the one of DM-RS ports indicated by DCI field PTRS-DMRS association. PUSCH antenna ports 1000, 1001, 1004 and 1005 share PT-RS port 0, and PUSCH antenna ports 1002, 1003, 1006 and 1007 share PT-RS port 1.

### Technical Issues To be Solved

According to the Rel-18 standard, when the maximum number of PTRS ports is set to 2 (when the rank is greater than 4), a PTRS-DMRS association is indicated based on a 4-bit table in 4 Tx Partial coherent transmission. Specifically, a value of the MSB 2 bits of the 4-bit PTRS-DMRS association field indicates one of the 1st to 4th DMRS ports which share PTRS port 0. The 1st to 4th DMRS ports which share PTRS port 0 may be associated with PUSCH antenna ports 1000, 1001, 1004, and 1005 which share PTRS port 0. A value of the LSB 2 bits of the 4-bit PTRS-DMRS association field indicates one of the 1st to 4th DMRS ports which share PTRS port 1. The 1st to 4th DMRS ports which share PTRS port 1 may be associated with PUSCH antenna ports 1002, 1003, 1006, and 1007 which share PTRS port 1.

For 3 Tx Partial coherent transmission, it may be assumed that coherent transmission is possible only for 2 ports. Coherent transmission may be possible only for 2 ports in a port configuration of 2 + 1 or 1 + 2. For example, a configuration scheme of a 3 Tx Partial coherent codebook as shown in Table 3 below may be considered.

**[Table 3]**

| | |
|---|---|
| Rank 1: | $\left[\begin{matrix}1 \\ x \\ 0\end{matrix}\right] and / or \left[\begin{matrix}0 \\ 0 \\ 1\end{matrix}\right]$ |
| Rank 2: | $\left[\begin{matrix}1 & 1 \\ x & y \\ 0 & 0\end{matrix}\right] and / or \left[\begin{matrix}1 & 0 \\ x & 0 \\ 0 & 1\end{matrix}\right]$ |
| Rank 3: | $\left[\begin{matrix}1 & 1 & 0 \\ x & y & 0 \\ 0 & 0 & 1\end{matrix}\right]$ |

Table 3 shows a 2 + 1 port mapping codebook (Precoding Matrix). Table 4 below shows a 1 + 2 port mapping codebook.

**[Table 4]**

| | |
|---|---|
| Rank 1: | $\left[\begin{matrix}1 \\ 0 \\ 0\end{matrix}\right] and / or \left[\begin{matrix}0 \\ 1 \\ x\end{matrix}\right]$ |
| Rank 2: | $\left[\begin{matrix}1 & 0 \\ 0 & 1 \\ 0 & x\end{matrix}\right] and / or \left[\begin{matrix}0 & 0 \\ 1 & 1 \\ x & y\end{matrix}\right]$ |
| Rank 3: | $\left[\begin{matrix}1 & 0 & 0 \\ 0 & 1 & 1 \\ 0 & x & y\end{matrix}\right]$ |

In Table 4, each of x and y may be one value of {1, j, -1, -j}. For codebook flexibility, the alphabet size may be configured/indicated by a base station.

The 2 + 1 and 1 + 2 port mapping order is pre-agreed, and codebooks may be configured or the UE may be configured/indicated with one of the two codebooks based on a capability report of the UE.

In 3 Tx partial coherent transmission, when coherent transmission is possible only for 2 ports, a PTRS-DMRS association indication method should be considered. More specifically, for a case in which 2 PTRS ports are configured/indicated and a case in which 1 PTRS port is configured/indicated during PUSCH transmission of a 3Tx UE, a method for a PTRS-DMRS association needs to be defined.

For convenience of description, in the following embodiments, it is assumed that coherent transmission is possible for only two ports out of three ports , but this is not intended to limit an application scope of the embodiments of the present disclosure. The embodiments described below may be applied to codebook-based uplink transmission based on three ports.

### Method 1-1

When the (maximum) number of PTRS ports in a 3 Tx partial coherent transmission is set to 2, two ports (e.g., antenna ports 1000 and 1001 or antenna ports 1000 and 1002) require a 1-bit DCI field for the PTRS-DMRS association. The remaining one port (e.g., antenna port 1002 or antenna port 1001) does not require the 1-bit DCI field for the PTRS-DMRS association.

The UE does not expect that a different PTRS port combination is indicated for each DMRS port at 3 Tx.

For example, for the 2 + 1 mapping of the CB PUSCH case in Table 3, the DMRS port corresponding to the layer using the PUSCH antenna port 1000 and/or 1001 that is a non-zero element in the codebook shares PTRS port 0. Here, the layer using the PUSCH antenna port 1000 and/or 1001 may refer to a layer to which a precoder whose first and/or second row is non-zero in a precoding matrix of a codebook is applied. The DMRS port corresponding to a layer using the PUSCH antenna port 1002 shares the remaining PTRS port 1. Here, the layer using PUSCH antenna port 1002 may refer to a layer to which a precoder whose third row is non-zero in the precoding matrix of the codebook is applied.

For example, for the 1 + 2 mapping of the CB PUSCH case in Table 4, the DMRS port corresponding to the layer using the PUSCH antenna port 1000 that is a non-zero element in the codebook shares PTRS port 0. Here, the layer using PUSCH antenna port 1000 may refer to a layer to which a precoder whose first row is non-zero in the precoding matrix of the codebook is applied. The DMRS port corresponding to the layer using PUSCH antenna port 1001 and/or 1002 shares the remaining PTRS port 1. Here, the layer using the PUSCH antenna port 1001 and/or 1002 may refer to a layer to which a precoder whose second and/or third row is non-zero in a precoding matrix of a codebook is applied.

However, the above-described examples have been described assuming that the two coherent ports are the PUSCH antenna ports 1000 and 1001 (or the PUSCH antenna ports 1001 and 1002) associated with the first row and the second row (or the second row and the third row) of the codebook (or precoding matrix). This is an example for convenience of description, and the technical spirit of the embodiment is not intended to be limited to this example. As a specific example, the embodiment may also be applied to the PUSCH antenna ports 1000 and 1002 associated with the first row and the third row of the codebook (or precoding matrix). In this case, PUSCH antenna ports 1000 and 1002 share PTRS port 0. One of the two DMRS ports sharing PTRS port 0 may be indicated based on the 1-bit PTRS-DMRS association field. The two DMRS ports may be associated with PUSCH antenna ports 1000 and 1002. More specifically, the two DMRS ports may be associated with layers transmitted based on PUSCH antenna ports 1000 and 1002. The remaining one port (PUSCH antenna port 1001) may be associated with PTRS port 1.

According to the embodiment, the following effects are derived. A 1-bit DCI field is required for the (coherent) 2 ports, but a DCI field is not required for the remaining 1 port. A legacy number of bits (2 bits) of the DCI field for the PTRS-DMRS association is reduced by 1 bit.

### Method 1-2

When the (maximum) number of PTRS ports is set to 2 in 3 Tx partial coherent transmission, one PTRS port may be associated with a DMRS port based on a specific DMRS port index (e.g., lower/higher DMRS port index) among the coherent 2 DMRS ports, and the remaining one PTRS port may be associated with the remaining one DMRS port. For example, for the 2 + 1 mapping in the PUSCH case, it may be assumed that coherent transmission is possible only for 2 ports among 3 DMRS ports. PTRS port 0 may be associated with a specific DMRS port index (e.g., lower/higher DMRS port index) among the 2 ports, and PTRS port 1 may be associated with the remaining 1 DMRS port. As described above, PTRS-DMRS association may be defined/configured without the DCI field. The DCI field is not required for the PTRS-DMRS association in 3 Tx. Therefore, DCI overhead may be reduced by the number of bits of the PTRS-DMRS association field compared to the legacy scheme.

### Method 2-1

In 3 Tx partial coherent transmission, when the (maximum) number of PTRS ports is set to 1 port, the PTRS-DMRS association may be indicated only for 2 ports capable of coherent transmission among the 3 DMRS ports. For example, for the 2 + 1 mapping of the CB PUSCH case in Table 3, PTRS may be mapped to only one port among two DMRS ports corresponding to the layer using the PUSCH antenna port 1000 and/or 1001 capable of coherent transmission. The layer using the PUSCH antenna port 1000 and/or 1001 may refer to a layer to which a precoder whose first and/or second row is non-zero in the precoding matrix of the codebook is applied. PTRS mapping may not be allowed for one DMRS port corresponding to a layer using the remaining PUSCH antenna port 1002.

In this case, the remaining one DMRS port may not estimate a phase error and is difficult to use, but the two DMRS ports for which the PTRS-DMRS association is indicated may estimate the phase error and may be used. Although two PTRS ports are required, when the UE supports one PTRS port, configuring the PTRS on two coherent ports is advantageous for ensuring phase estimation and performance compared to configuring the PTRS on the remaining one port. For example, the two coherent ports are likely to have the same phase noise source (e.g., panel, amplifier, etc.). Therefore, when only one PTRS port needs to be transmitted, it is more advantageous to map the PTRS port in a direction of utilizing two Txs with more similar phase noise attributes among three Txs (even if the remaining one Tx is ignored).

According to the legacy scheme, a 2-bit DCI field is required to indicate a PTRS-DMRS association associated with one DMRS port among three layers. According to the embodiment, the number of bits of the DCI field for indicating the PTRS-DMRS association is reduced from 2 bits to 1 bit.

### Method 2-2

In 3 Tx partial coherent transmission, when the (maximum) number of PTRS ports is set to 1, one of two DMRS ports among three DMRS ports may be indicated based on the 1-bit PTRS-DMRS association field. As an example, the two DMRS ports may include one port selected according to a predetermined rule among two ports (capable of coherent transmission) (e.g., lower/higher DMRS port index) and the remaining one port.

For example, for the 2 + 1 mapping in the PUSCH case, only 2 ports of 3 DMRS ports may be capable of coherent transmission. The PTRS port may be indicated to be associated with a specific DMRS port index (e.g., a lower/higher DMRS port index) or the remaining DMRS port among the 2 ports. In this case, one of the 2 ports capable of coherent transmission or the remaining one port may be indicated based on a 1-bit field. When the ports are indicated as described above, the DCI field for PTRS-DMRS association is reduced from 2 bits to 1 bit.

### Method 2-3

When the (maximum) number of PTRS ports is set to 1 in 3 Tx Partial coherent transmission, two ports may be selected from among the three DMRS ports according to a predetermined rule without distinguishing coherency DMRS ports. For example, a lowest DMRS port index and a second lowest DMRS port index may be selected. Among the two DMRS ports, a DMRS port associated with the PTRS port may be indicated based on the 1-bit field. When the ports are indicated as described above, the DCI field for the PTRS-DMRS association is reduced from 2 bits to 1 bit.

The proposals may be finally applied through combination/association.

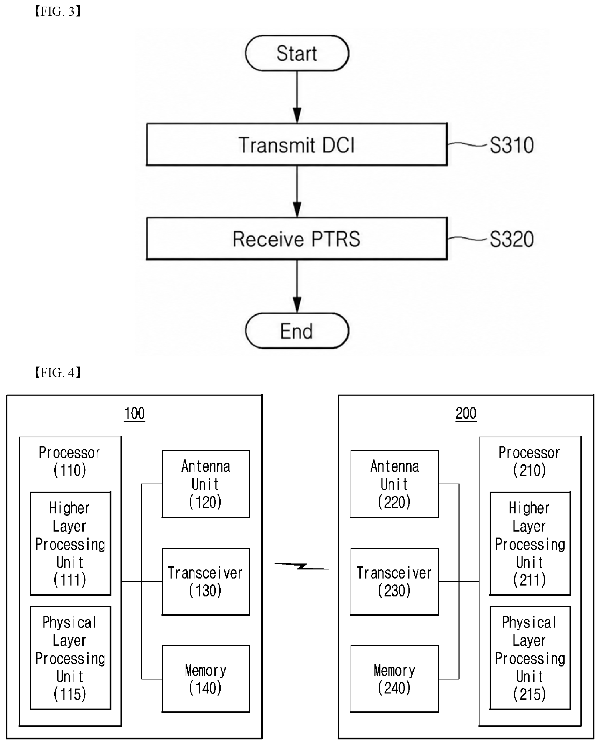

In terms of implementation, the operations of the base station/UE according to the embodiments described above (e.g., operations based on at least one of Method 1-1, Method 1-2, Method 2-1, Method 2-2 and Method 2-3) may be processed by devices (e.g., 100 and 200) in FIG. 4 described below.

Further, the operations of the base station/UE according to the embodiments (e.g., operations described above (e.g., operations based on at least one of Method 1-1, Method 1-2, Method 2-1, Method 2-2, and Method 2-3) may also be stored in memories (e.g., 140 and 240 in FIG. 4) in the form of commands/programs (e.g., instructions and executable codes) for driving at least one processor (e.g., 110 and 210 in FIG. 4).

Hereinafter, the above-described embodiments will be described in detail with reference to FIGS. 2 and 3 in terms of the operations of the UE and the base station. Methods to be described below are just distinguished for convenience of description and it is needless to say that some components of any one method may be substituted with some components of another method or may be applied in combination with each other.

FIG. 2 is a flowchart for describing a method according to an embodiment of the present disclosure.

Referring to FIG. 2, the method according to an embodiment of the present disclosure includes a step S210 of receiving Downlink Control Information (DCI) and a step S220 of transmitting a Phase Tracking Reference Signal (PTRS).

In step S210, a user equipment (UE) receives DCI from a base station. For example, the DCI may be based on a DCI format for scheduling a Physical Uplink Shared Channel (PUSCH).

In step S220, the UE transmits a PTRS to the base station. For example, the PTRS may be associated with the PUSCH.

For example, the DCI may include a PTRS-DMRS association field. Based on the PTRS-DMRS association field, an association between PTRS port(s) and DMRS port(s) may be indicated.

According to an embodiment, PTRS port(s) related to the PTRS may be associated with codebook based uplink (UL) transmission based on one or more antenna ports. For example, the codebook based UL transmission may be i) partial-coherent codebook based UL transmission or ii) non-coherent codebook based UL transmission.

Hereinafter, embodiments related to PTRS-DMRS association for supporting 3Tx UL transmission will be described in detail.

According to an embodiment, based on that the number of the one or more antenna ports is 3 and two PTRS ports are configured: the number of bits of the PTRS-DMRS association field may be 1. Based on the PTRS-DMRS association field, one of two DMRS ports which share a first PTRS port (e.g., PTRS port 0) may be indicated. The two DMRS ports may be associated with two antenna ports among three antenna ports. A second PTRS port (e.g., PTRS port 1) may be associated with a remaining antenna port among the three antenna ports. This embodiment may be based on Method 1-1 and/or Method 1-2.

For example, the two antenna ports may be antenna ports 1000 and 1002 (e.g., PUSCH antenna ports 1000 and 1002), and the remaining antenna port may be antenna port 1001 (e.g., PUSCH antenna port 1001).

In a specific example, the PUSCH antenna ports 1000 and 1002 share PTRS port 0, and the PUSCH antenna port 1001 is associated with PTRS port 1. The PTRS-DMRS association field (1 bit) may represent one of two DMRS ports (1^{st} DMRS port and 2^{nd} DMRS port) which share PTRS port 0. PTRS port 0 may be associated with a layer among layers transmitted based on the PUSCH antenna ports 1000 and 1002. The layer may be associated with one of the two DMRS ports (1^{st} DMRS port and 2^{nd} DMRS port) indicated/determined based on the PTRS-DMRS association field (1 bit).

For example, the DCI may include a precoding information and number of layers field. Based on the precoding information and number of layers field, a Transmitted Precoding Matrix Indicator (TPMI) may be indicated.

For example, a precoding matrix based on the TPMI may include at least one column composed of three rows, and the three rows may be associated with the three antenna ports.
In a specific example, the precoding matrix may be one of matrices according to a Rank (number of layers) shown in Table 3 (or Table 4). The precoding matrix may be related to i) partial-coherent codebook based UL transmission or ii) non-coherent codebook based UL transmission.

Hereinafter, precoding matrices by types of coherent codebooks will be described in detail.

In the case of full-coherent codebook based UL transmission, all elements of the precoding matrix are non-zero elements.

In the case of partial-coherent codebook based UL transmission, the precoding matrix includes at least one element that is zero. For example, the precoding matrix related to a partial-coherent codebook may be a matrix having a form such as $\left[\begin{matrix}1 \\ x \\ 0\end{matrix}\right]$, $\left[\begin{matrix}1 & 0 \\ x & 0 \\ 0 & 1\end{matrix}\right] , \left[\begin{matrix}1 & 1 & 0 \\ x & y & 0 \\ 0 & 0 & 1\end{matrix}\right]$. The arrangement of non-zero/zero elements and the values of the elements may vary depending on an implementation of the codebook (precoding matrix).

In the case of non-coherent codebook based UL transmission, each column of the precoding matrix includes only one non-zero element, and each row of the precoding matrix also includes only one non-zero element. For example, the precoding matrix related to a non-coherent codebook may be a matrix having a form such as $\left[\begin{matrix}1 \\ 0 \\ 0\end{matrix}\right] , \left[\begin{matrix}1 & 0 \\ 0 & 0 \\ 0 & 1\end{matrix}\right] , \left[\begin{matrix}1 & 0 & 0 \\ 0 & 1 & 0 \\ 0 & 0 & 1\end{matrix}\right]$. The arrangement of non-zero elements and the values of the elements may vary depending on an implementation of the codebook (precoding matrix).

In the precoding matrices described above, a first row is associated with a first antenna port among the three antenna ports (e.g., PUSCH antenna port 1000), a second row is associated with a second antenna port among the three antenna ports (e.g., PUSCH antenna port 1001), and a third row is associated with a third antenna port among the three antenna ports (e.g., PUSCH antenna port 1002).

According to an embodiment, the two antenna ports may refer to two antenna ports capable of coherent transmission among the three antenna ports as described above. More specifically, the two antenna ports may be the PUSCH antenna ports 1000 and 1002 associated with the first and third rows based on non-zero elements of the precoding matrix. Specifically, the two antenna ports may be associated with two elements of three elements in the at least one column. Each of the two elements may be based on a value other than zero.

According to an embodiment, based on that the number of the one or more antenna ports is 4 and two PTRS ports are configured, the PTRS-DMRS association may be indicated according to a conventional scheme. Specifically, the number of bits of the PTRS-DMRS association field may be 2. Based on a value of a Most Significant Bit (MSB) of the PTRS-DMRS association field, one of two first DMRS ports which share the first PTRS port may be indicated. Based on a value of a Least Significant Bit (LSB) of the PTRS-DMRS association field, one of two second DMRS ports which share the second PTRS port may be indicated. The two first DMRS ports may be associated with two antenna ports (e.g., PUSCH antenna ports 1000 and 1002) among four antenna ports (e.g., PUSCH antenna ports 1000-1003), and the two second DMRS ports may be associated with remaining two antenna ports (e.g., PUSCH antenna ports 1001 and 1003) of the four antenna ports.

According to an embodiment, based on that the number of the one or more antenna ports is 8 and two PTRS ports are configured, the PTRS-DMRS association may be indicated according to a conventional scheme. Specifically, the number of bits of the PTRS-DMRS association field may be 4. Based on a value of two Most Significant Bits (MSBs) of the PTRS-DMRS association field, one of four first DMRS ports which share the first PTRS port may be indicated. Based on a value of two Least Significant Bits (LSBs) of the PTRS-DMRS association field, one of four second DMRS ports which share the second PTRS port may be indicated. The four first DMRS ports may be associated with four antenna ports (e.g., PUSCH antenna ports 1000, 1001, 1004, and 1005) among eight antenna ports (e.g., PUSCH antenna ports 1000-1007), and the four second DMRS ports may be associated with remaining four antenna ports (e.g., PUSCH antenna ports 1002, 1003, 1006, and 1007) among the eight antenna ports.

According to an embodiment, based on that the number of the one or more antenna ports is 3 and one PTRS port is configured: the number of bits of the PTRS-DMRS association field may be 1, and One of two DMRS ports which share the first PTRS port may be indicated based on the PTRS-DMRS association field. This embodiment may be based on at least one of Method 2-1 to Method 2-3.

For example, the two DMRS ports may be associated with two specific antenna ports among the three antenna ports.

For example, the two specific antenna ports may be related to partial-coherent codebook based UL transmission. This embodiment may be based on Method 2-1.

For example, the two specific antenna ports may include i) one port determined among two antenna ports related to partial-coherent codebook based UL transmission, and ii) a remaining one of the three antenna ports other than the two antenna ports. This embodiment may be based on Method 2-2.

For example, the two specific antenna ports may be determined based on an order of an antenna port index among the three antenna ports. This embodiment may be based on Method 2-3.

The operations based on the above steps S210 to S220 may be implemented by an apparatus of FIG. 4. For example, a UE 200 may control one or more transceivers 230 and/or one or more memories 240 to perform the operations based on S210 to S220.

Hereinafter, the embodiments described above will be described in detail in terms of base station operation.

Steps S310 to S320 described below correspond to the steps S210 to S220 described in FIG. 2. In consideration of the correspondence, duplicated descriptions are omitted. That is, the detailed description of the base station operation described below may be replaced with the description/embodiments of FIG. 2 corresponding to the operations. For example, the description/embodiments of FIG. 2 for S210-S220 may be further applied to the base station operations of S310-S320 described below.

FIG. 3 is a flowchart for explaining a method according to another embodiment of the present disclosure.

Referring to FIG. 3, the method according to another embodiment of the present disclosure includes a step S310 of transmitting DCI and a step S320 of receiving PTRS.

In step S310, a base station transmits DCI to a user equipment (UE).

In step S320, the base station receives a PTRS from the UE.

For example, the DCI may include a PTRS-DMRS association field.

For example, PTRS port(s) related to the PTRS may be associated with codebook based UL transmission based on one or more antenna ports.

According to an embodiment, based on that the number of the one or more antenna ports is 3 and two PTRS ports are configured: the number of bits of the PTRS-DMRS association field may be 1. Based on the PTRS-DMRS association field, one of two DMRS ports which share a first PTRS port (e.g., PTRS port 0) may be indicated. The two DMRS ports may be associated with two antenna ports of the three antenna ports. A second PTRS port (e.g., PTRS port 1) may be associated with a remaining antenna port among the three antenna ports.
This embodiment may be based on Method 1-1 and/or Method 1-2.

The operations based on the above steps S310 to S320 may be implemented by an apparatus of FIG. 4. For example, a base station 100 may control one or more transceivers 130 and/or one or more memories 140 to perform the operations based on S310 to S320.

The operations/terms based on the above-described embodiments have been described assuming the 5G system. However, this is merely for convenience of explanation and is not intended to limit the scope of application of the technical problem and the problem solution to be solved by the present disclosure to a specific system. That is, the technical challenges/technical issues/problems mentioned in the present disclosure may equally exist in other systems (e.g., 6G system). It is obvious that embodiments of the present disclosure can be extended and applied to solve the same problems in the other systems. Therefore, for expanded application of embodiments of the present disclosure to other systems, terms defined/described based on the 5G system can be replaced/changed with terms defined in the other systems (or generalized terms not specific to one system). For example, PRACH, PUSCH, PUCCH, or SRS may be replaced/changed to an uplink signal (or uplink channel). For example, SSB, CSI-RS, PDSCH, or PDCCH may be replaced/changed to a downlink signal (or downlink channel).

A device to which an embodiment of the present disclosure is applicable (a device implementing the method/operation according to an embodiment of the present disclosure) is described below with reference to FIG. 4.

FIG. 4 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 210 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

## Claims

1. A method comprising:
receiving, from a base station, downlink control information (DCI); and
transmitting, to the base station, a phase tracking reference signal (PTRS);
wherein the DCI includes a PTRS-DMRS association field,
wherein a PTRS port related to the PTRS is associated with codebook based uplink (UL) transmission based on one or more antenna ports,
wherein based on that the number of the one or more antenna ports is 3 and two PTRS ports are configured:
the number of bits of the PTRS-DMRS association field is 1,
one of two DMRS ports which share a first PTRS port is indicated based on the PTRS-DMRS association field, and the two DMRS ports are associated with two antenna ports among three antenna ports,
a second PTRS port is associated with a remaining antenna port among the three antenna ports.

2. The method of claim 1, wherein based on that the number of the one or more antenna ports is 4 and the two PTRS ports are configured:
the number of bits of the PTRS-DMRS association field is 2,
one of two first DMRS ports which share the first PTRS port is indicated based on a value of a Most Significant Bit (MSB) of the PTRS-DMRS association field,
one of two second DMRS ports which share the second PTRS port is indicated based on a value of a Least Significant Bit (LSB) of the PTRS-DMRS association field, and
the two first DMRS ports are associated with two antenna ports of four antenna ports, and the two second DMRS ports are associated with remaining two antenna ports of the four antenna ports.

3. The method of claim 1, wherein based on that the number of the one or more antenna ports is 8 and the two PTRS ports are configured:
the number of bits of the PTRS-DMRS association field is 4,
one of four first DMRS ports which share the first PTRS port is indicated based on a value of two Most Significant Bits (MSBs) of the PTRS-DMRS association field,
one of four second DMRS ports which share the second PTRS port is indicated based on a value of two Least Significant Bits (LSBs) of the PTRS-DMRS association field,
the four first DMRS ports are associated with four antenna ports of eight antenna ports, and the four second DMRS ports are associated with remaining four antenna ports of the eight antenna ports.

4. The method of claim 1, wherein the DCI includes a precoding information and number of layers field, and
wherein a Transmitted Precoding Matrix Indicator (TPMI) is indicated based on the precoding information and number of layers field.

5. The method of claim 4, wherein a precoding matrix based on the TPMI includes at least one column composed of three rows, and
wherein the three rows are associated with three antenna ports.

6. The method of claim 5, wherein the precoding matrix is related to i) partial-coherent codebook based UL transmission or ii) non-coherent codebook based UL transmission.

7. The method of claim 6, wherein the two antenna ports are associated with two of three elements in the at least one column, and each of the two elements is based on a value other than zero.

8. The method of claim 1, wherein the two antenna ports are antenna ports 1000 and 1002, and the remaining antenna port is antenna port 1001.

9. The method of claim 1, wherein based on that the number of the one or more antenna ports is 3 and one PTRS port is configured:
the number of bits of the PTRS-DMRS association field is 1, and
One of two DMRS ports which share the first PTRS port is indicated based on the PTRS-DMRS association field.

10. The method of claim 9, wherein the two DMRS ports are associated with two specific antenna ports among the three antenna ports.

11. The method of claim 10, wherein the two specific antenna ports are related to partial-coherent codebook based UL transmission.

12. The method of claim 10, wherein the two specific antenna ports include i) one port determined among two antenna ports related to partial-coherent codebook based UL transmission, and ii) a remaining one of the three antenna ports other than the two antenna ports.

13. The method of claim 10, wherein the two specific antenna ports are determined based on an order of an antenna port index among the three antenna ports.

14. A user equipment (UE) comprising:
one or more transceivers;
one or more processors; and
one or more memories connected to the one or more processors and storing instructions,
wherein the instructions, based on being executed by the one or more processors, cause the UE to perform all steps of a method according to any one of claims 1 to 13.

15. An apparatus comprising:
one or more memories; and
one or more processors functionally connected to the one or more memories,
wherein the one or more memories store instructions which, based on being executed by the one or more processors, cause the apparatus to perform all steps of the method according to any one of claims 1 to 13.

16. A non-transitory computer-readable storage medium storing instructions,
wherein the instructions, based on being executed by one or more processors, cause a user equipment (UE) to perform all steps of the method according to any one of claims 1 to 13.

17. A method comprising:
transmitting, to a user equipment (UE), Downlink Control Information (DCI); and
receiving, from the UE, a Phase Tracking Reference Signal (PTRS),
wherein the DCI includes a PTRS-DMRS association field,
wherein a PTRS port related to the PTRS is associated with codebook based uplink (UL) transmission based on one or more antenna ports,
wherein based on that the number of the one or more antenna ports is 3 and two PTRS ports are configured:
the number of bits of the PTRS-DMRS association field is 1,
one of two DMRS ports which share a first PTRS port is indicated based on the PTRS-DMRS association field, and the two DMRS ports are associated with two antenna ports among three antenna ports,
a second PTRS port is associated with a remaining antenna port among the three antenna ports.

18. A base station comprising:
one or more transceivers;
one or more processors; and
one or more memories connected to the one or more processors and storing instructions,
wherein the instructions, based on being executed by the one or more processors, cause the base station to perform all steps of the method according to claim 17.
